# EUROPÄISCHE PATENTANMELDUNG

(11) **EP 0 573 744 A1**
(43) Veröffentlichungstag der Anmeldung: **15.12.1993**
(21) Anmeldenummer: 93104548.8
(22) Anmeldetag: 19.03.1993
(51) Int. Cl.: G02B 6/255

(54) **Verfahren und Vorrichtung zur Bearbeitung von Lichtwellenleiter-Endflächen**

(30) Priorität: 12.06.1992 DE 4219353
(71) Anmelder: Richard Hirschmann GmbH & Co., D-73726 Esslingen (DE)
(72) Erfinder: Sandbaumhüer, Dirk, W-7000 Stuttgart 1 (DE); Röckle, Jürgen, W-7312 Kirchheim (DE)
(74) Vertreter: Geyer, Ulrich F., Dr. Dipl.-Phys.

(57) **Zusammenfassung**

Ein einfaches Verfahren zur Bearbeitung von Wellenleiter-Endflächen besteht darin, daß der Lichtwellenleiter im Bereich der Endfläche erhitzt und plastisch verformt wird. Vorzugsweise wird die Endfläche des Lichtwellenleiters auf eine Negativform eines erhitzbaren Bearbeitungswerkzeugs aufgedrückt. Der Endflächenbereich des Lichtwellenleiters wird vorteilhafterweise zu einem optisch abbildenden Element verformt. Dadurch ist kein zusätzliches, einzelnes Bauteil für die optische Abbildung des Lichtstrahls erforderlich. Vorrichtungen zur Durchführung des erfindungsgemäßen Verfahrens sind angegeben.

## Beschreibung

Die Erfindung betrifft ein Verfahren sowie eine Vorrichtung zur Bearbeitung von Lichtwellenleiter-Endflächen.

Bei Lichtwellenleitern oder optisch leitenden Fasern sollte der Lichtübergang aus dem Lichtwellenleiter oder der Faser in ein anderes Medium oder aus einem anderen Medium in den Lichtwellenleiter bzw. die Faser oder auch zwischen zwei Lichtwellenleiter möglichst verlustfrei und dämpfungsarm erfolgen. Um dies zu erreichen, muß die Oberflächengüte der Endflächen der Lichtwellenleiter möglichst gut sein. Zu diesem Zwecke werden die Lichtwellenleiter-Endflächen poliert. Um eine gute Oberflächengüte zu erreichen, muß dies in mehreren Polierschritten mit unterschiedlichen, abnehmenden Schleifkorngrößen erfolgen. Die Oberflächenbearbeitung ist daher umständlich und zeitaufwendig. Darüber hinaus wird der Strahl beim Austritt aus dem Lichtwellenleiter zu einem divergierenden Strahl aufgeweitet, wodurch erhebliche Lichtverluste auftreten.

Der Erfindung liegt daher die Aufgabe zugrunde, ein Verfahren und eine Vorrichtung zur Bearbeitung von Lichtwellenleiter-Endflächen anzugeben bzw. zu schaffen, mit dem bzw. mit der Faser-Endflächen hoher optischer Güte und mit geringen Dämpfungsverlusten bei geringem Bearbeitungsaufwand erreicht werden können.

Die gestellte Aufgabe wird mit einem Verfahren gelöst, bei dem der Lichtwellenleiter im Bereich der Endfläche erhitzt und plastisch verformt wird. Eine derartige Wellenleiter-Endflächenbearbeitung ist sehr einfach, zuverlässig und mit geringem Arbeitsaufwand verbunden.

Gemäß einer bevorzugten Ausführungsform der Erfindung wird die Endfläche des Lichtwellenleiters auf eine Negativform eines erhitzten Bearbeitungswerkzeugs aufgedrückt. Die Negativform kann dabei je nach der gewünschten Endfläche eine vorgegebene Kontur aufweisen. Eine konkave Negativform des erhitzten Bearbeitungswerkzeugs ist dabei besonders vorteilhaft. Dadurch entsteht eine konvexe Lichtwellenleiter-Endfläche, die das in der Faser geführte Licht an der Grenzfläche Lichtwellenleiter/Luft zur Faserachse hin bricht. Ohne daß zusätzliche Maßnahmen erforderlich wären, wird die Divergenz des austretenden Lichtstrahls daher verringert bzw. es entsteht ein paralleler oder entsprechend der Stirnflächenkontur und dem Radius der Stirnfläche ein konvergierender oder auch divergierender Lichtstrahl.

Im Zusammenhang mit Polymer-Optischen-Fasern (POF) ist bereits vorgeschlagen worden, die Faserendflächen gegen eine erhitzte, ebene Oberfläche mit möglichst hoher Oberflächengüte zu drücken. Mit diesem Prägevorgang ergeben sich zwar relativ ebene Faser-Endflächen. Da in Kunsstoff-Fasern jedoch innere mechanische Spannungen "eingefroren" sind, werden diese beim Erhitzen freigesetzt und führen zu Störungen der Fasergeometrie. Dies und auch weitere Gründe führen zu einem Verkürzen oder Verdicken der Faser, oder sie weitet sich bei partieller Erhitzung pilzförmig auf. Zusätzlich hierzu wird das plastische Material beim Prägevorgang verdrängt, wodurch die pilzförmige Aufweitung noch verstärkt wird. Dies führt zu einer weiteren Strahlaufweitung, so daß die dadurch bedingte schlechtere Abstrahlcharakteristik die Lichtverluste noch erhöht.

Diese Nachteile können dadurch vermieden werden, daß der Wellenleiter-Endfläche eine konvexe Kontur durch Verwendung einer konkaven Negativform gegeben wird. Der Radius der konvexen Lichtwellenleiter-Endfläche kann je nach den Gegebenheiten und Wünschen optimal gewählt werden. Die konvexe Gestalt der Lichtwellenleiter-Endfläche ermöglicht also eine Kompensation einer aus welchen Gründen auch immer auftretenden Strahlaufweitung und damit die Verringerung von Lichtverlusten an den Endflächen.

Um das Licht möglichst verlustfrei von einem ersten in einen zweiten Lichtwellenleiter überzukoppeln oder einen parallelen Lichtstrahl zu erhalten, ist es dabei besonders vorteilhaft, wenn die Kontur der konkaven Negativform bzw. deren Radius so gewählt ist, daS das aus der Lichtwellenleiter-Endfläche austretende Licht parallel verläuft. Bei Verwendung eines Lichtwellenleiters mit einer entsprechenden Endfläche für den lichtempfangenden Lichtleiter ist daher eine optimale Überkopplung möglich.

Das Bearbeitungswerkzeug wird vorzugsweise mit einem Heizelement, einer Induktionsspule und/oder durch Ultraschall oder Reibung erhitzt. Vorteilhaft ist es weiterhin, wenn das Bearbeitungswerkzeug aus einem gut wärmeleitenden Material besteht.

Gemäß einer weiteren Ausgestaltung der Erfindung besteht die Negativform aus einem Material mit guten Antihafteigenschaften für das zu verformende Material. Alternativ ist es auch möglich, die Negativform mit einer Antihaftschicht zu versehen.

Gemäß einer besonders vorteilhaften Ausgestaltung der Erfindung wird der Bereich der Lichtwellenleiter-Endfläche zu einem optisch abbildenden Element verformt.

Das erfindungsgemäße Verfahren ist also nicht nur für die Endflächenpräparierung und für die Herstellung einer Endfläche mit hoher optischer Güte, sondern auch zur Schaffung von optisch abbildenden Elementen geeignet, die unmittelbar am Faserende ausgebildet werden. Dadurch ist es nicht mehr erforderlich, diskrete, abbildende Elemente vor den Lichtwellenleitern vorzusehen, sondern in den Lichtwellenleiter-Enden sind die abbildenden Elemente bereits integriert.

Die Erfindung ermöglicht also die sehr schnelle und präzise Ausbildung optischer Abbildungselemente an den Faserenden bei denkbar geringem Aufwand. Viele teuere Einzelelemente für die optische Abbildung des Lichtstrahls sind daher nicht mehr erforderlich, wodurch insbesondere auch der damit verbundene hohe Montage- und/oder Justieraufwand entfällt. Auch müssen der Lichtwellenleiter und die abbildenden Elemente nicht mehr getrennt bearbeitet werden.

Es wurde bereits vorgeschlagen, konvexe Formen an aus Quarzglas bestehenden Lichtwellenleitern anzuschmelzen, beispielsweise für die Einkopplung von Licht aus Halbleiterlasern in Quarzglasfasern. Beim Anschmelzen muß die Endfläche durch Polieren oder Anritzen/Brechen unter großem Aufwand eine hohe optische Güte erfahren. Danach wird das Quarzglas durch Erhitzen dieses Bereichs zum Schmelzen gebracht. Durch die Oberflächenspannung der Glasschmelze bildet sich eine konvexe bis tropfenförmige Kontur aus. Dabei muß das Quarzglas auf einer sehr hohen Schmelztemperatur gehalten werden. Darüber hinaus gehen die vielfältigen Bearbeitungsparameter, die nicht beherrscht werden, in dieses Verfahren mit ein, so daß das optisch abbildende Element sehr undefiniert ist.

Beim erfindungsgemäßen Verfahren, im Bereich der Endfläche ein optisch abbildendes Element mit einem eine Negativform aufweisenden, erhitzten Berbeitungswerkzeug auszubilden, braucht das zuvor beschriebene aufwendige Verfahren nicht durchgeführt werden, so daß das optisch abbildende Element wesentlich einfacher erzeugt werden kann, das darüber hinaus auch eine wesentlich definiertere, gewünschte Kontur aufweist. Durch die Verwendung der Negativform ergibt sich eine genaue, gewünschte Geometrie der Endflächenkontur entsprechend den anwendungsspezifischen Erfordernissen mit hoher Genauigkeit. Es ist wesentlich einfacher, die Negativform präzise auszubilden, die dann für eine Vielzahl von optisch abbildenden Elementen eingesetzt werden kann.

Je nach der Ausführungsform der Negativform des erhitzten Bearbeitungswerkzeugs können auf diese Weise praktisch alle gewünschten optischen Abbildungselemente, wie Konvex-, Konkav-, Fresnel- und/oder holographische Linsen ausgebildet werden. Es ist auch möglich, ein optisches Gitter, beispielsweise ein beugendes Gitter, auszubilden.

Gemäß einer weiteren sehr vorteilhaften Ausführungsform der Erfindung wird ein plastisches, verformbares Material an einem plastisch nicht verformbaren Lichtwellenleiter angebracht. Das plastisch verformbare Material wird nach dem Anbringen am plastisch nicht verformbaren Lichtwellenleiter verformt. Dadurch ist die Anwendung der vorliegenden Erfindung auch für den Fall möglich, daß der Lichtwellenleiter selbst aus einem nicht plastisch verformbaren Material besteht.

Gemäß einer weiteren Ausführungsform der Erfindung wird ein aus plastisch verformbarem Material bestehendes Element vor dem Anbringen an einem Lichtwellenleiter plastisch verformt. Dies kann dadurch geschehen, daß das aus plastisch verformbarem Material bestehende Element in der zuvor beschriebenen Weise durch Aufdrücken auf eine entsprechende Negativform eines erhitzten Bearbeitungswerkzeugs verformt wird. Alternativ ist es jedoch auch möglich, die Verformung des aus plastisch verformbarem Material bestehenden Elements durch Eingießen oder Einspritzen in eine Negativform durchzuführen.

Vorteilhafterweise kann auch die Anschlußgeometrie für das Ankoppeln an den eigentlichen Lichtwellenleiter ausgeformt werden. Gemäß einer weiteren Ausführungsform der Erfindung wird eine Kontur zur Zentrierung und/oder Fixierung des Elements am Lichtwellenleiter ausgebildet. Die gewünschte Kontur dieses am Lichtwellenleiter anzubringenden Elements weist also nicht nur die Endflächen- bzw. Stirnflächenkontur für das optisch abbildenden Element, sondern auch die Anschlußgeometrie für eine dämpfungsarme Ankopplung an den Lichtwellenleiter und/oder eine Ausformung zur Zentrierung und Fixierung des Elements am Lichtwellenleiter auf.

Das Element kann also entweder direkt an den Lichtwellenleiter angespritzt oder angegossen oder als diskretes Bauteil gefertigt und nachträglich auf den Lichtwellenleiter aufgebracht werden.

Das diskrete plastisch verformbare Element kann am Lichtwellenleiter aufgeklebt, aufgeschmolzen und/oder aufgeklemmt werden. Das Material des zu verformenden bzw. verformten Elements ist dabei lichtdurchlässig und aushärtbar. Vorzugsweise wird als Material Gießharz, Glas und/oder Kunststoff, vorzugsweise in Form eines Thermoplastes, eines Duroplastes, eines Elastomer-Kunststoffs und/oder in Form von Silicon verwendet.

Die gestellte Aufgabe wird auch durch eine Vorrichtung gelöst, die ein erhitzbares Bearbeitungswerkzeug mit einer Negativform aufweist, in bzw. auf die der Endflächenbereich des Lichtwellenleiters ein- bzw. aufdrückbar ist.

Vorteilhafte Ausgestaltungen der erfindungsgemäßen Vorrichtung sind in den Unteransprüchen angegeben.

Das erfindungsgemäße Verfahren sowie die erfindungsgemäße Vorrichtung sind bei einer Vielzahl von Anwendungsfällen einsetzbar. Wie bereits erläutert, können unterschiedliche, anwendungsspezifische Lichtleiter-Endflächenkonturen geschaffen werden, beispielsweise solche, bei der ein paralleler Strahl erzeugt wird, was insbesondere für die Faser/Faser-Kopplung vorteilhaft ist. Eine weitere Anwendungsform besteht in der Einkopplung von von einer lichtemittierenden Diode abgestrahltem Licht in einen Lichtwellenleiter. Dafür sollte eine große Apertur bzw. ein großer Öffnungswinkel vorgesehen sein, der durch eine entsprechende Form der Lichtwellenleiter-Endfläche erreicht wird. Die Ein- bzw. Auskoppelung von Licht in Lichtwellenleiter bzw. aus Lichtwellenleitern unter Verwendung geeigneter Optiken ist mit dem erfindungsgemäßen Verfahren bzw. mit der erfindungsgemäßen Vorrichtung ebenfalls möglich, wobei wiederum auf einfache Weise eine Aperturanpassung an die elektro-optischen bzw. opto-elektrischen Bauteile möglich ist.

Das erfindungsgemäße Verfahren bzw. die erfindungsgemäße Vorrichtung ist mit Vorteil auch bei Lichtwellenleiter- bzw. Faseranschlüssen für Koppler oder Multiplexer, oder auch bei Steckerdirektanschlüssen an die Bauteile einsetzbar, aber auch zur direkten Erzeugung der Koppeloptik für die Strahlteilung und/oder Strahlzusammenführung.

Ein weiteres Anwendungsgebiet besteht im Zusammenhang mit Sensoren und Lichtschranken. Bei diesen Anwendungsfällen wird häufig ein gut kollimierbarer Lichtstrahl benötigt, um möglichst große Distanzen möglicht verlustfrei überbrücken zu können.

Besonders vorteilhaft ist auch die Anwendung des erfindungsgemäßen Verfahrens bzw. der erfindungsgemäßen Vorrichtung bei Anzeigeelementen, etwa bei Matrixanzeigen. Bezüglich des Ablesewinkels und des Kontrastes mußten oft erhebliche Kompromisse eingegangen werden. Die Möglichkeit der Optimierung war bisher gering, da nur vorhandene Bauelemente ohne große Anpaßmöglichkeiten verwendet werden konnten. Durch das erfindungsgemäße Verfahren bzw. erfindungsgemäße Vorrichtung lassen sich nunmehr die Anzeigeelemente für jede spezifische Anwendung gut optimieren, wobei auch die Möglichkeit einer kostengünstigen, automatischen Fertigung besteht.

Auf Grund der einfachen und übersichtlichen Fertigungsmethoden auf der Grundlage des erfindungsgemäßen Verfahrens kann der Fertigungsvorgang auf einfache Weise automatisiert werden, was insbesondere für hohe Stückzahlen von besonderem Vorteil ist. Dies gilt insbesondere für die Automobilindustrie zur Konfektionierung von Lichtwellenleiter-Netzen in Kraftfahrzeugen, bei denen zwar kurze Streckenlängen, jedoch sehr zahlreiche Anschlüsse und Trennstellen erforderlich sind.

Die Erfindung sowie weitere Merkmale und Vorteile werden nachstehend an Hand von Ausführungsbeispielen unter Bezugnahme auf die Figuren erläutert. Es zeigen:
- Fig. 1: einen nach dem erfindungsgemäßen Verfahren hergestellten Lichtleiter-Endbereich in schematischer Schnitt-Darstellung;
- Fig. 2: einen herkömmlichen Lichtleiter-Endbereich mit ebener Endfläche in schematischer Schnitt-Darstellung;
- Fig. 3: einen nach einem bereits vorgeschlagenen Verfahren hergestellter Lichtleiter-Endbereich in schematischer Schnitt-Darstellung;
- Fig. 4: ein Bearbeitungswerkzeug mit Negativform gemäß der vorliegenden Erfindung vor der plastischen Verformung der Lichtwellenleiter-Endfläche, in schematischer Schnitt-Darstellung;
- Fig. 5: das Bearbeitungswerkzeug mit Negativform gemäß der vorliegenden Erfindung nach plastischer Verformung der Lichtwellenleiter-Endfläche in schematischer Schnitt-Darstellung;
- Fig. 6: die Verwendung von nach dem erfindungsgemäßen Verfahren hergestellten Lichtwellenleiter-Endbereichen am Beispiel einer Anordnung zur Strahlteilung bzw. Strahlzusammenführung in schematischer Darstellung;
- Fig. 7: eine schematische Darstellung zur Erläuterung einer weiteren Ausführungsform des erfindungsgemäßen Verfahrens in schematischer Darstellung; und
- Fig. 8: eine weitere Ausführungsform des erfindungsgemäßen Verfahrens.

Der Lichtwellenleiter 1 weist einen Lichtwellenleiter-Endbereich 2 auf, dessen Endfläche 3 eine konvexe Form besitzt. Das aus der Endfläche 3 des Lichtwellenleiters 1 austretende Licht wird beim Übergang vom Lichtwellenleiter 1 in Luft 4 zur Lichtwellenleiter-Achse 5 hin derart gebrochen, daß sich ein paralleler Lichtstrahl 6 ergibt, dessen Lichtfleck 7 mit einem Radius R1 schematisch dargestellt ist. Das mit einem natürlichen Aufweitungswinkel Phi vom Lichtwellenleiter 1 an dessen Endfläche 3 ankommende Licht wird also zu einem parallelen Lichtstrahl gebeugt.

Je nachdem, wie der Krümmungsradius der Lichtwellenleiter-Endfläche 3 gewählt wird, ist es gewünschtenfalls auch möglich, einen divergierenden oder einen konvergierenden Lichtstrahl 6 zu erzeugen, der den Lichtwellenleiter 1 verläßt.

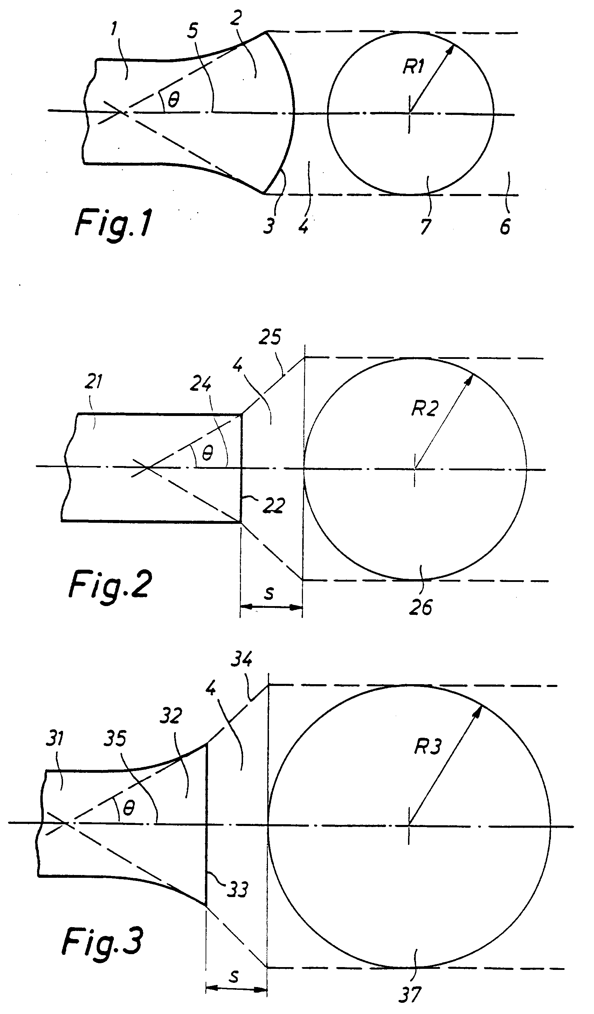

Fig. 2 zeigt einen Lichtwellenleiter 21 mit einer herkömmlichen ebenen Endfläche 22. Das mit einem Aufweitungswinkel Phi zu dessen Endfläche 22 gelangende Licht wird beim Übergang vom Lichtwellenleiter 21 in Luft 4 von der Lichtwellenleiter-Achse 24 weg gebrochen, so daß sich ein divergierender Lichtstrahl 25 ergibt, der in einem Abstand s von der Lichtwellenleiter-Endfläche 22 einen Lichtfleck 26 mit einem Radius R2 bildet, der auf Grund des divergierenden Lichtstrahls 25 größer als der in Fig. 1 schematisch dargestellte Lichtfleck 7 ist, der sich mit der nach dem erfindungsgemäßen Verfahren hergestellten Endfläche 3 ergibt.

Fig. 3 zeigt eine bereits vorgeschlagene Ausführungsform, bei der der Endbereich 32 des Lichtleiters 31 zur Verbesserung der optischen Güte seiner Endfläche 33 auf eine erhitzte, ebene Oberfläche gedrückt wurde, so daß sich die aus Fig. 3 ersichtliche, gegenüber dem Durchmesser des Lichtwellenleiters 31 größere Endfläche 33 ergibt. Bei wiederum gleichem Aufweitungswinkel Phi innerhalb des Wellenleiter-Endbereichs 32 wird der Strahl bei Übergang vom Lichtwellenleiter 31 in Luft 4 von der Lichtwellenleiter-Achse 35 weg gebrochen. Dadurch ergibt sich im Abstand s von der Lichtwellenleiter-Endfläche 33 der in Fig. 3 schematisch dargestellte Lichtfleck 37, dessen Radius R3 größer ist als der Lichtfleckradius 26 oder gar 7, wie er durch den Lichtwellenleiter-Endbereich 22 gemäß Fig. 2 bzw. 2 gemäß Fig. 1 gebildet wird.

Wie aus dem Vergleich der Fig. 1 bis 3 unmittelbar hervorgeht, ist die Abstrahlcharakteristik des nach dem erfindungsgemäßen Verfahren hergestellten Lichtwellenleiter-Endbereichs wesentlich besser als bei Lichtwellen-Endbereichen, die eine ebene bzw. gestauchte Endfläche aufweisen.

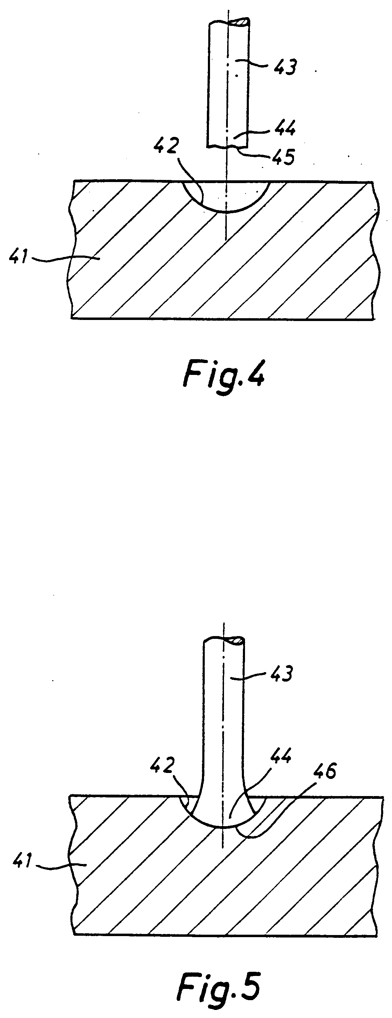

In Fig. 4 ist schematisch ein erhitzbares Bearbeitungswerkzeug 41 mit einer Negativform 42 dargestellt. Ein Lichtwellenleiter 43 wird mit seinem Ende 44, dessen Endfläche 45 nicht bearbeitet zu sein braucht, entsprechend Fig. 5 in die Negativform 42 gedrückt. Da das Bearbeitungswerkzeug heiß ist, schmilzt der Lichtwellenleiter 43 in seinem Endbereich 44 und es entsteht eine konvexe Endfläche 46, wie dies auch Fig. 1 zeigt.

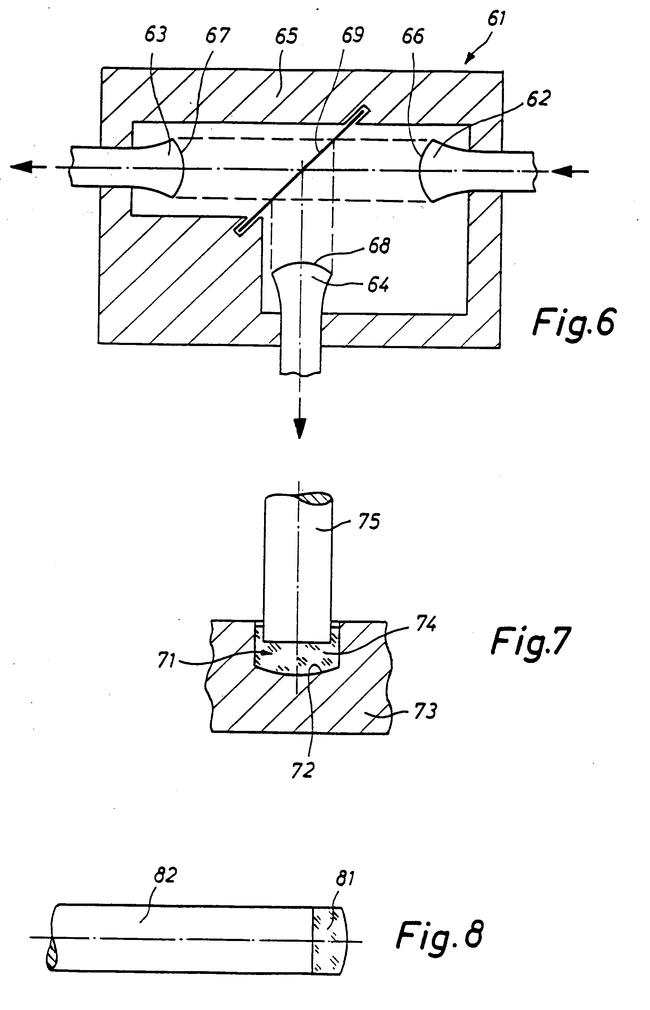

Fig. 6 zeigt eine Anordnung 61 zur Strahlteilung unter Verwendung von Lichtwellenleiter-Endbereichen 62, 63, 64, die mit dem erfindungsgemäßen Verfahren bearbeitet wurden und in einem Gehäuse 65 angeordnet sind. Die Endflächen 66, 67, 68 der Lichtwellenleiter-Endbereiche 62, 63, 64 weisen wiederum eine konvexe Kontur auf, wobei der Krümmungsradius der Konturen jeweils so gewählt ist, daß die Endfläche 66 des Lichtwellenleiters-Endbereich 62, über den das Licht eingekoppelt wird, einen parallelen Strahl abgibt, der einerseits durch einen halbdurchlässigen Spiegel 69 auf die Endfläche 67 des Wellenleiter-Endbereichs 63 wiederum als im wesentlicher paralleler Strahl auftritt und durch die konvexe Kontur dieser Ebene 67 in den Wellenleiter-Endbereich 63 hinein gebrochen wird. Andererseits gelangt ein Teil des parallelen, von der Endfläche 66 des Lichtwellenleiter-Endbereichs 62 kommenden Lichts durch Teilreflexion am halbdurchlässigen Spiegel 69 auf die Endfläche 68 des Lichtwellenleiter-Endbereichs 64, der auf Grund seiner konvexen Kontur das Licht wiederum in den Lichtwellenleiter hineinbricht.

Durch die erfindungsgemäße Ausbildung der Lichtwellenleiter-Endbereiche 62, 63 und 64 mit den konkaven Endflächen 66, 67, 68 sind zusätzliche strahlabbildende Elemente nicht erforderlich. Der Herstellungs- und insbesondere auch Justieraufwand ist daher denkbar gering.

Fig.7 zeigt ein alternatives Bearbeitungsverfahren einer Lichtwellenleiter-Endfläche 71, bei der in der Negativform 72 eines erhitzbaren Bearbeitungswerkzeugs 73 ein Endbereich 74 eines Lichtwellenleiters 75 durch Einspritzen oder Eingießen eines plastisch verformbaren Materials gebildet ist. Dieser Endbereich bzw. dieses Element 74 besitzt dadurch die durch die Negativform 72 gewünschte bzw. vorgegebene Kontur.

Das plastisch verformbare Material kann vor der Verformung im Bearbeitungswerkzeug 73 bereits am Lichtwellenleiter 75 befestigt sein. Es ist jedoch auch möglich, das plastisch verformbare Material zunächst in die Negativform 71 einzugeben und danach den Lichtwellenleiter 75 in das noch nicht ausgehärtete Material einzutauchen, so daß dadurch eine Verbindung zwischen dem Element 74 und dem Lichtwellenleiter 75 entsteht.

Bei der in Fig. 8 dargestellten Ausführungsform wurde das aus einem plastisch verformbaren Material zuvor hergestellte Element 81 auf die Endfläche eines Lichtwellenleiters 82 aufgebracht, beispielsweise aufgeklebt, aufgeschmolzen und/oder aufgeklemmt.

Bei dem erfindungsgemäßen Verfahren zur Bearbeitung von Lichtwellenleiter-Endflächen hängt die Güte
der erzeugten Endfläche im wesentlichen von den Bearbeitungsparametern, wie Temperatur des Bearbeitungswerkzeugs, Anpreßdruck und/oder Anpreßzeit, ab.

Das Verfahren ist auf Grund seiner Übersichtlichkeit und Einfachheit besonders für die Automatisierung, beispielsweise zur Konfektionierung von Lichtwellenleiter-Kabeln mit Steckeranschlüssen geeignet. Das Kabel kann dabei zum Beispiel automatisch abgelängt, nach dem erfindungsgemäßen Verfahren hinsichtlich seiner Endflächen bearbeitet, in Steckerkörpern angebracht und daran fixiert werden.

Zusammenfassend sieht die Erfindung folgendes vor:
1. Verfahren zur Bearbeitung von Lichtwellenleiter-Endflächen, wobei der Lichtwellenleiter im Bereich der Endfläche erhitzt und plastisch verformt wird.
2. Verfahren nach 1 , wobei die Endfläche des Lichtwellenleiters auf eine Negativform eines erhitzbaren Bearbeitungswerkzeugs aufgedrückt wird.
3. Verfahren nach 1 oder 2, wobei die Endfläche des Lichtwellenleiters in eine konkave Negativform des erhitzbaren Bearbeitungswerkzeugs eingedrückt wird.
4. Verfahren nach einem der vorhergehenden Punkte, wobei die Kontur der konkaven Negativform des erhitzbaren Bearbeitungswerkzeugs so gewählt ist, daß an der Lichtwellenleiter-Endfläche ein paralleler Lichtstrahl austritt.
5. Verfahren nach einem der vorhergehenden Punkte, wobei das Bearbeitungswerkzeug mit einem Heizelement, einer Induktionsspule, mit Ultraschall und/oder Reibung erhitzt wird.
6. Verfahrennach einem der vorhergehenden Punkte, wobei das Bearbeitungswerkzeug aus einem gut wärmeleitenden Material besteht.
7. Verfahren nach einem der vorhergehenden Punkte, wobei die Negativform aus einem Material mit guten Antihafteigenschaften für das zu verformende Material besteht.
8. Verfahren 1 bis 6, wobei die Negativform antihaftbeschichtet ist.
9. Verfahren nach einem der vorhergehenden Punkte, wobei der Bereich der Endfläche zu einem optisch abbildenden Element verformt wird.
10. Verfahren, wobei ein plastisch verformbares Material an einem plastisch nicht verformbaren Lichtwellenleiter angebracht wird.
11. Verfahren nach 10, wobei das plastisch verformbare Material nach dem Anbringen am plastisch nicht verformbaren Lichtwellenleiter verformt wird.
12. Verfahren nach 10, wobei ein aus plastisch verformbaren Material bestehendes Element vor dem Anbringen am plastisch nicht verformbaren Lichtwellenleiter verformt wird.
13. Verfahren nach 10 bis 12, wobei ein aus plastisch verformbarem Material bestehendes Element durch Eingießen oder Einspritzen in eine Negativform erzeugt wird.
14. Verfahren nach 12 oder 13, wobei eine Anschlußgeometrie für die Anbringung des an einem plastisch verformbaren Material bestehenden Elements an den Lichtwellenleiter ausgebildet wird.
15. Verfahren nach 12 bis 14, wobei am aus einem plastisch verformbaren Material bestehenden Element eine Kontur zur Zentrierung und/oder Fixierung desselben am Lichtwellenleiter ausgebildet wird.
16. Verfahren nach 12 bis 15, wobei das aus einem plastisch verformbaren Material bestehende Element auf den Lichtwellenleiter aufgeklebt, aufgeschmolzen und/oder aufgeklemmt wird.
17. Verfahren nach einem der vorhergehenden Punkte, wobei das zu verformende Material ein lichtdurchlässiges Gießharz, ein lichtdurchlässiger Kunststoff und/oder Glas ist.
18. Verfahren nach 17, wobei der Kunststoff ein Duroplast, ein Thermoplast, ein Elastome-Kunststoff und/oder Silicon ist.
19. Verfahren nach einem der vorhergehenden Punkte, wobei das optisch abbildende Element eine Konvex-, Konkav-, Fresnel- und/oder holographische Linse ist.
20. Verfahren nach 1 bis 18, wobei das optisch abbildende Element ein optisches Gitter ist.
21. Vorrichtung zur Bearbeitung von Lichtwellenleiter-Endflächen, gekennzeichnet durch ein erhitzbares Bearbeitungswerkzeug (41, 73) mit einer Negativform (42, 71), in die ein Endflächenbereich (2, 44, 62, 63, 64) des Lichtwellenleiters (1, 21, 75) eindrückbar ist.
22. Vorrichtung nach 21, wobei die Negativform (42, 71) konkav ist.
23. Vorrichtung nach 21 oder 22, wobei der Endflächenbereich (2, 44, 62, 63, 64) des Lichtwellenleiters (1, 21, 75) ein optisch abbildendes Element ist.
24. Vorrichtung nach 21 bis 23, wobei ein plastisch verformbares Material an einem plastisch nicht-verformbaren Lichtwellenleiter (1, 21, 75) aufgebracht ist.
25. Vorrichtung nach 21 bis 24, wobei das plastisch verformbare Material nach dem Anbringen am plastisch nicht verformbaren Lichtwellenleiter (1, 21, 75) verformt ist.
26. Vorrichtung nach 21 bis 25, wobei ein aus plastisch verformbarem Material bestehendes Element (74, 81) vor dem Anbringen an plastisch nicht verformbaren Lichtwellenleiter (1, 21, 75) verformt ist.

## Patentansprüche

1. Verfahren zur Bearbeitung von Lichtwellenleiter-Endflächen, dadurch **gekennzeichnet,** daß der Lichtwellenleiter im Bereich der Endfläche erhitzt und plastisch verformt wird.

2. Verfahren nach Anspruch 1, dadurch gekennzeichnet, daß die Endfläche des Lichtwellenleiters auf eine Negativform eines erhitzbaren Bearbeitungswerkzeugs aufgedrückt wird.

3. Verfahren nach Anspruch 1 oder 2, dadurch gekennzeichnet, daß die Endfläche des Lichtwellenleiters in eine konkave Negativform des erhitzbaren Bearbeitungswerkzeugs eingedrückt wird.

4. Verfahren nach einem der vorhergehenden Ansprüche, dadurch gekennzeichnet, daß die Kontur der konkaven Negativform des erhitzbaren Bearbeitungswerkzeugs so gewählt ist, daß an der Lichtwellenleiter-Endfläche ein paralleler Lichtstrahl austritt.

5. Verfahren nach einem der vorhergehenden Ansprüche, dadurch gekennzeichnet, daß das Bearbeitungswerkzeug mit einem Heizelement, einer Induktionsspule, mit Ultraschall und/oder Reibung erhitzt wird.

6. Verfahren nach einem der vorhergehenden Ansprüche, dadurch gekennzeichnet, daß das Bearbeitungswerkzeug aus einem gut wärmeleitenden Material besteht.

7. Vorrichtung zur Bearbeitung von Lichtwellenleiter-Endflächen, **gekennzeichnet** durch ein erhitzbares Bearbeitungswerkzeug (41, 73) mit einer Negativform (42, 71), in die ein Endflächenbereich (2, 44, 62, 63, 64) des Lichtwellenleiters (1, 21, 75) eindrückbar ist.

8. Vorrichtung nach Anspruch 7, dadurch gekennzeichnet, daß die Negativform (42, 71) konkav ist.

9. Vorrichtung nach Anspruch 7 oder 8, dadurch gekennzeichnet, daß der Endflächenbereich (2, 44, 62, 63, 64) des Lichtwellenleiters (1, 21, 75) ein optisch abbildendes Element ist.

10. Vorrichtung nach einem der Ansprüche 7 bis 9, dadurch gekennzeichnet, daß ein plastisch verformbares Material an einem plastisch nicht-verformbaren Lichtwellenleiter (1, 21, 75) aufgebracht ist.
